# EUROPEAN PATENT APPLICATION

(11) **EP 2 017 035 A1**
(43) Date of publication of application: **21.01.2009**
(21) Application number: 08425470.5
(22) Date of filing: 10.07.2008
(51) Int. Cl.: B23Q 1/62, B23Q 39/02

(54) **Overhead handling head for holding tools**

(30) Priority: 17.07.2007 IT CO20070026; 04.06.2008 IT MI20081019
(71) Applicant: B.G.M. S.r.l., 22070 Luisago (CO) (IT)
(72) Inventor: Sudermann, Alain, 67700 Saverne (FR)
(74) Representative: Lecce, Giovanni

(57) **Abstract**

An overhead tool handling head comprises one or more carriages (3) running longitudinally (axis X) on first parallel horizontal guides (2) arranged on a base frame (1); at least one column (7) engages on each of said carriages (3), which comprises second front and/or back parallel vertical guides (8) (axis Z) whereon one or more carriages (9) run, each provided with third cross running (axis Y) horizontal guides (12) for one or more bars (13) that support, either directly or by turntables (28), fixed or rotating end heads (30), for holding tools (14, 14').

## Description

This invention relates to an overhead handling head for holding tools. It is known that in order to properly carry out particular and sequential processes on multiple surfaces, such as for example: holes, slits, grooves, notches and the like for surface or through processes on open metal section bars, with tubular or trimmed section, and/or closed with solid section of any type, at present one must resort to the use of multiple machine tools for specific functions or robot machines, withy the use of quite high costs and means: in the first case because multiple machines and more labour are required, in the second case because robot machines are very expensive and the amortisation is long and often inadequate for the specific uses.

The object of this invention is to eliminate the above drawbacks by an overhead handling head for holding tools, characterised according to what claimed in claim 1. Further and advantageous features are defined in the dependent claims.

In particular, the advantages achieved by this invention essentially consist in that on a single base frame that may be arranged upright, upturned or even oriented in vertical direction and/or inclined on machines for feeding section bars in general, based on the means for feeding and guiding the mechanical parts to be treated, it is possible to carry out different processes, it is possible to arrange one or more operating groups designed to carry out, on the same mechanical parts, independent and different processes, either according to the three conventional Cartesian axes X, Y, Z, or according to overhead angular and/or rotating movements, using different types of tools, such as: plasma and/or laser heads, water cutting heads, percussion heads for mechanical engraving, ink marking heads for barcodes, numbers, letters, alphanumerical, control heads and others. Another advantage consists in that the movements according to the three conventional Cartesian axes X, Y, Z and according to angular orientations and/or rotating overhead, are produced either with independent motors or also with combined motors, for two or more movements, designed to simplify and/or make all the operations more autonomous and rational.

The invention is described in detail, according to configurations provided by way of a non-limiting example, with reference to the attached drawings, wherein:
figs. 1 and 2 show front and back perspective views of a first version of a three-dimensional handling head with only two columns arranged and running on a single base frame, according to the invention,
figures 3 and 4 show front and back views of the same head of figures 1 and 2,
figs. 5 and 6 show front and back perspective views of a second version of a three-dimensional handling head with only two columns arranged and running on a single base frame, according to the invention,
fig. 7 shows an overall perspective view of a third version of the three-dimensional and overhead head, with independent motors, with only two opposite columns arranged and running on a single base frame,

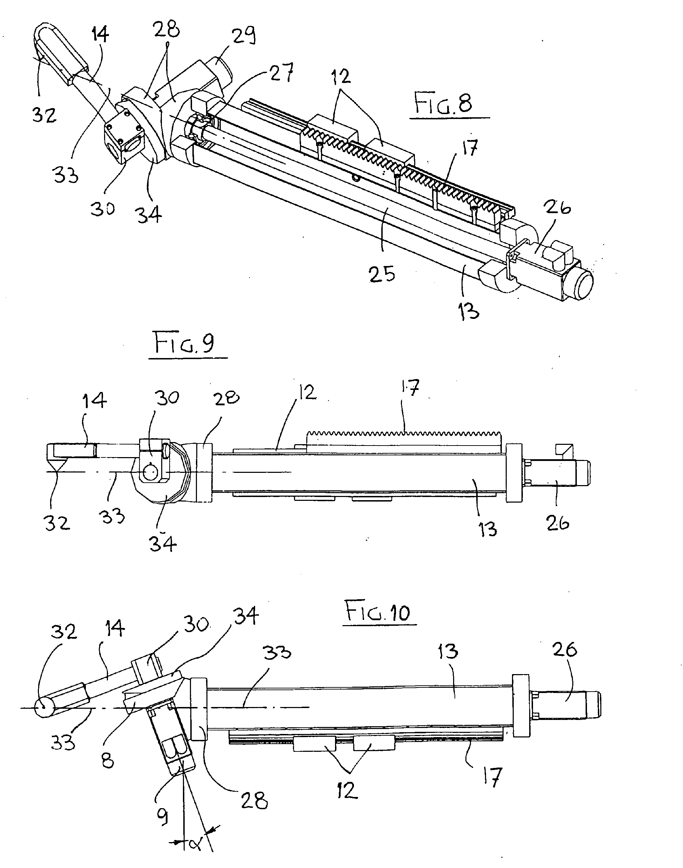

fig. 8 shows the perspective, partially dissected view of a cross support bar for a tool holding head mounted on a turntable with angular or rotating end movements,
figures 9 and 10 show side and plan views of the same cross bar of figure 8,
figure 11 shows the detail of a different motor of the cross bar of figure 8,
figure 12 shows the detail of a different tool applied to the tool holding head, and

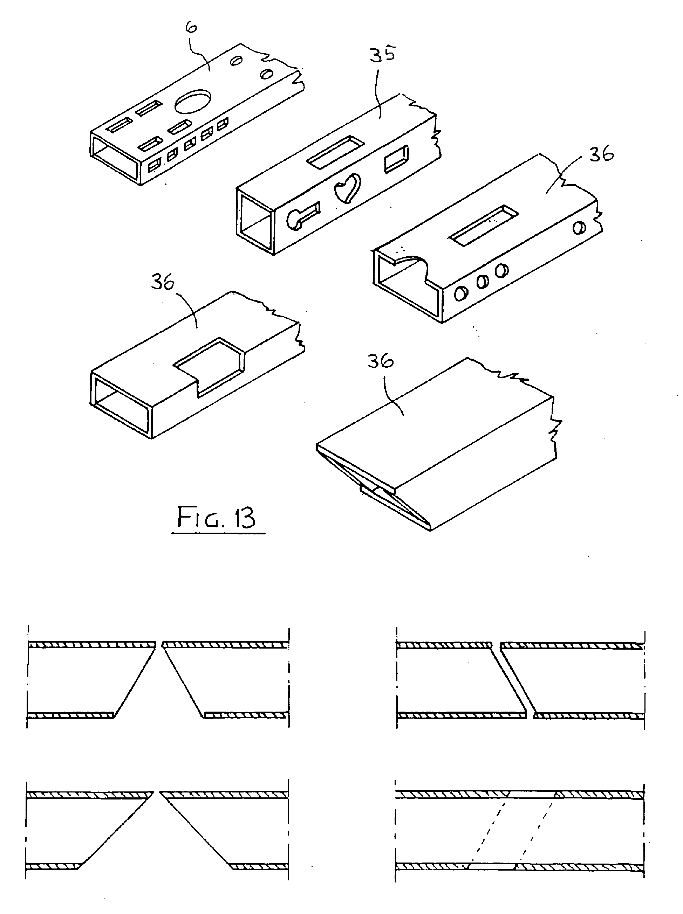

fig. 13 shows different examples of processes on tubular mechanical components that may be carried out on three Cartesian axes X, Y, Z and with angular or rotating end movements, by tools arranged on the handling heads according to the invention.

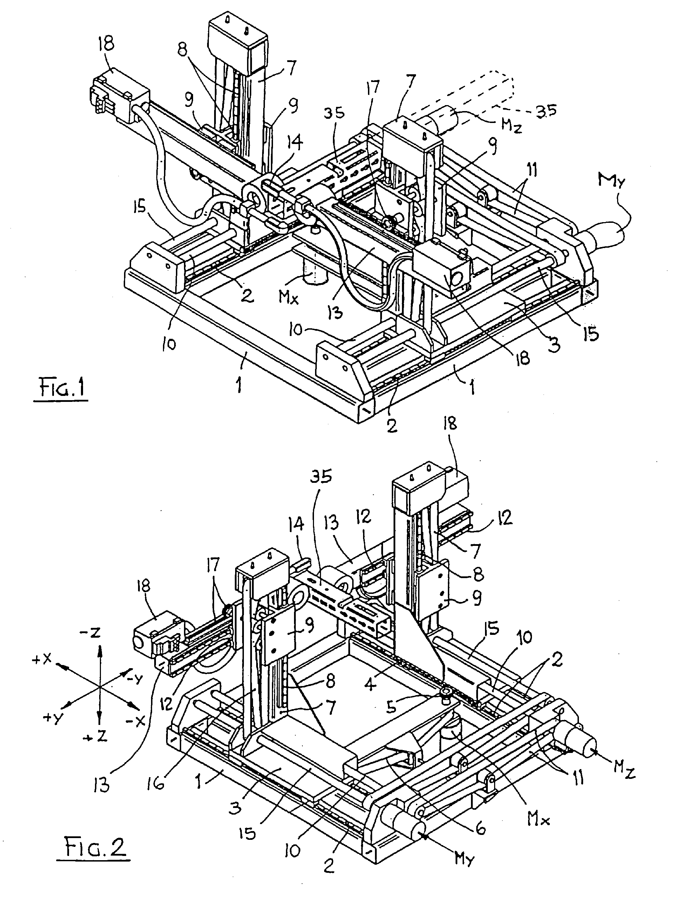

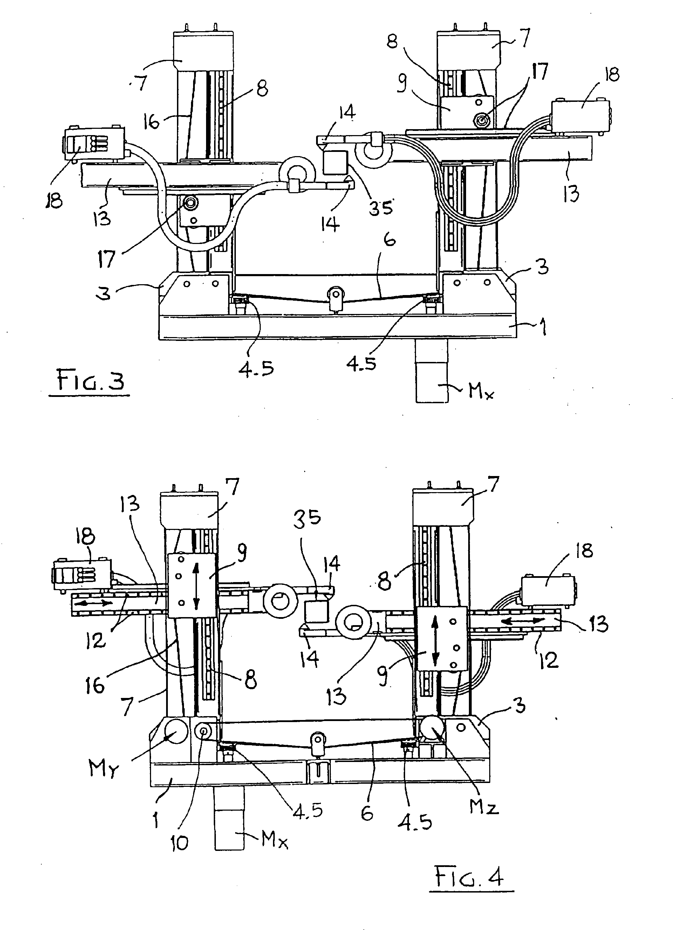

With reference to figures 1 to 4, a first configuration of the operating head with three-dimensional movement, is composed of a base frame 1 that supports parallel horizontal guides 2, whereon carriages 3 may run in longitudinal direction (axis X), for example by side racks 4 engaging with pinions 5 associated to at least one motor Mx with cross drive 6.

Said carriages 3 support columns 7 whereon vertical guides 8 are arranged, which may be arranged at the front, as indicated in the figures, and/or also at the back (axis Z), whereon carriages 9 run, moved by at least one motor Mz, for example by drives 10 and transmissions 11.

In turn, said carriages 9 comprise horizontal guides 12 running transversally (axis Y) whereon drives 15, transmissions 16 and pinion-rack couplings 17 of the bars 13 supporting tool holding heads 14, move, for example moved by motors My 13. The operating control units 18 of the fixed tool holding heads 14 are arranged on the bars 13, associated to computerised units, not shown.

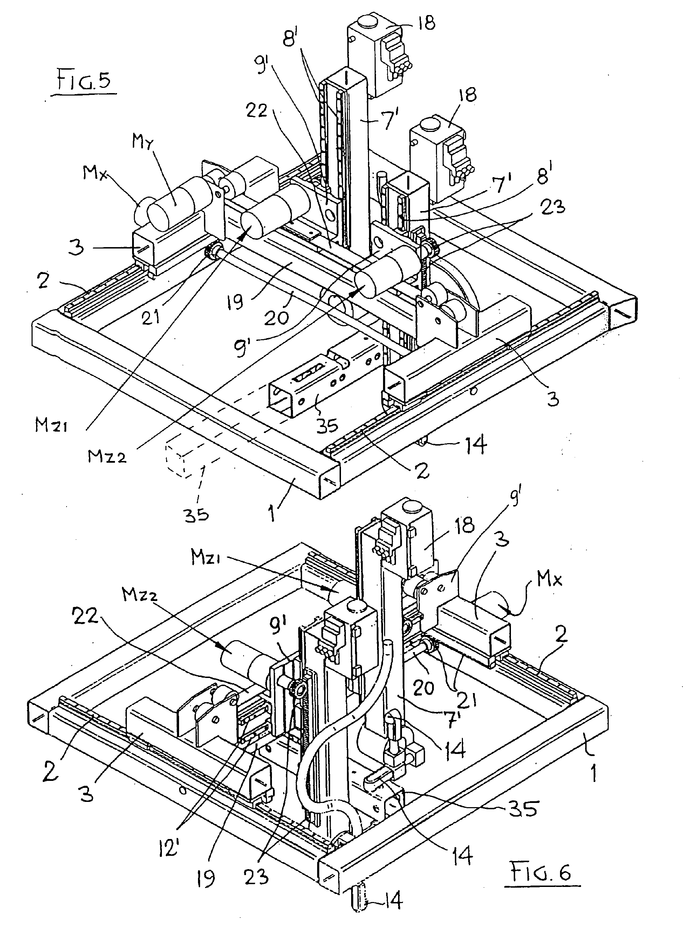

With reference to figures 5 and 6, a second configuration of the operating head with three-dimensional movement consists in that on said parallel horizontal guides 2 of said base frame 1, the carriages 3 move with longitudinal run (axis X) associated to each other by a cross carriage 19, with motor Mx with dual cross transmission 20 and pinion rack couplings 21. Parallel horizontal and orthogonal running guides 12' (axis Y) are arranged on said cross carriage 19 for a pair of carriages 9', moved with a single side motor My and belt transmission 22. Vertical guides are located on said carriages 9' whereon the guides 8' of columns 7' are slidingly engaged (axis Z), moved by motors Mz1 and Mz2, for example by pinion-rack couplings 23.

Said fixed tool holding heads 14 and the relative operating control units 18 are arranged on the columns 7', associated to computerised units, not shown.

It should be noted that in the configurations described above, the tool holding heads 14 are of the fixed type, in any case they may be of the oscillating and rotating type in overhead direction, as indicated in the following description.

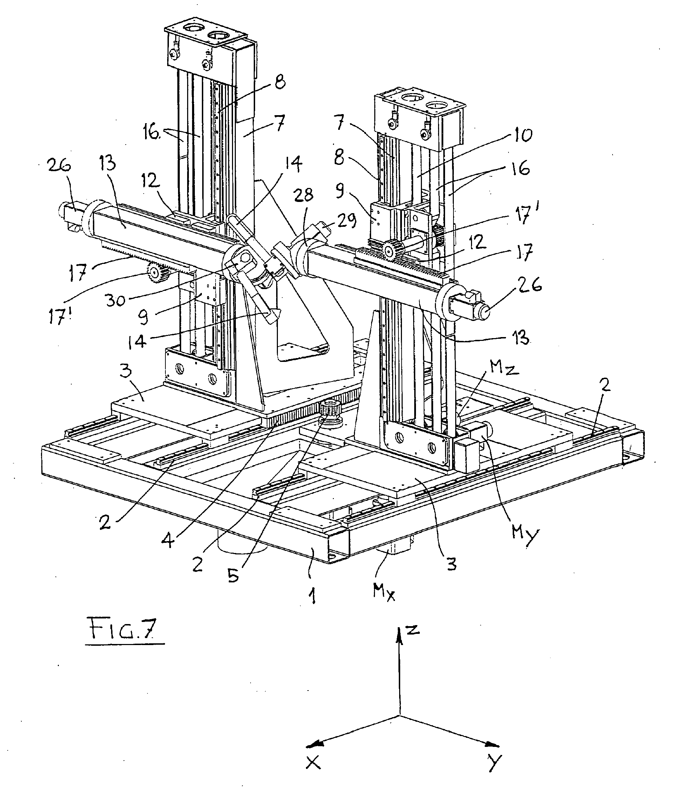

Always with reference to the configurations shown in figures 1 to 6, and with reference to figure 7, one or more carriages 3 may be positioned on the parallel horizontal guides 2 of the base frame 1, with possibility of running in longitudinal direction (axis X), provided with transmission means controlled by motors Mx.

More precisely, one (right or left), two (side and/or opposite) or more carriages 3 may operate on the same base frame 1, in independent or combined manner, according to corresponding or shunted independent motors and even for different operations.

Likewise, each carriage 3 is designed to withstand one or more columns 7, whereon there are arranged vertical front and/or back guides 8 (axis Z), for running one or more carriages 9, moved by transmission means 10 and controlled by independent or combined motors My according to the operation of each column.

In turn, each of said carriages 9 comprises guides 12 for cross running (axis Y) whereon a cross bar 13 moves.

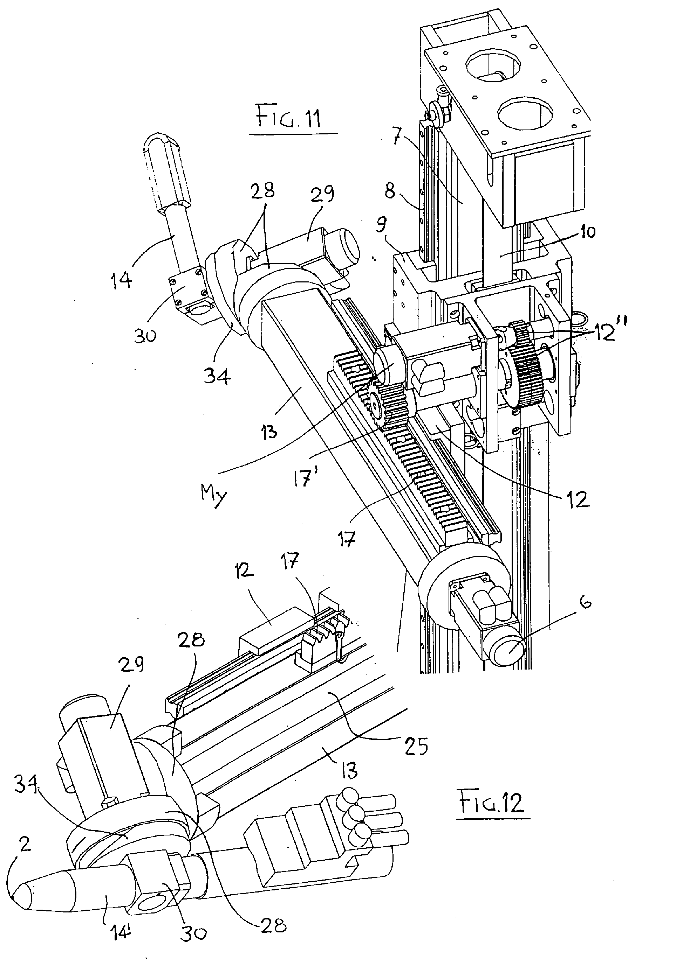

For example, the translatory motion of the cross bar 13 is obtained either by at least one plain or toothed belt coupling 16 that transmits the motion to a pinion 12' coupled to a rack 17 integral to the bar itself, or by the direct coupling of said motor My with said pinion 12', through a geared transmission 12" (figure 11).

In the configuration of figure 7, where the operating head is shown in a further different configuration thereof with three-dimensional and overhead movement and with substantially independent motors, a driving shaft 25 is provided inside the bar 13, preferably but not limitingly controlled in rotation by an independent back motor 26, on the front end 27 whereof, supported by bearings, a square turntable 28 is keyed, which supports for example an independent motor 29, on the axis whereof a rotating head 30 for holding tools 14, 14', is keyed.

In a different configuration (not shown), said driving shaft 25, which controls said square turntable 28 in rotation, may be made of the tubular type for allowing the passage, therein, of electrical cables for controlling said motor 29 or also the feeding cables and/or pipes for gas and air or whatever is required to operate the tools 14, 14'.

The base of the square turntable 28 for coupling with the driving shaft 25 has a particular inclination (α) suitable for ensuring that the working nozzle or point 32 of the interchangeable tools used is always in perfect coaxial alignment 33 with the axis of rotation of the same driving shaft 25.

Interchangeable shims 34 may be inserted between said square turntable 28 and said support 30 to ensure the above coaxiality 33, irrespective of the type of interchangeable tool 14, 14' and/or of the length extension of the same.

For special tools it is also possible to use square turntables 28 in se interchangeable.

In short, the overhead handling head as described and illustrated in the above embodiments and in the possible versions of transmission and/or formal modifications, ensures total overhead operation not just three-dimensional in the traditional meaning, but also in the sense of angular, oscillatory and/or rotating movements of the square turntables 28 and of the heads 30 with orientation thereof, and the relative tools 14, 14', according to any desired position, based on the processes to be carried out on the surfaces, even peripheral ones, of trimmed bodies with quadrangular, rectangular, polygonal or circular section, solid and/or tubular.

Finally, it is noted that the movement of said carriages 3, of said columns 7, of said carriages 9, of said bars 13, of said end turntables 28 and of said tool holding heads 30 can be realised by conventional driving gears such as: motor reduction units, actuators, linear motors, hydraulic pistons, angular transmissions, flexible cables, rack couplings 4, 17 and engaging or pinions 5, 12', plain or toothed belt couplings 16, geared and mating couplings, suitable for any specific functional requirement.

By way of an example, reference is made in the drawings of figure 16 to processes that may be carried out on square 35, quadrangular 36, round or any polygonal tubular elements.

## Claims

1. An overhead handling head for supporting tools, **characterised in that** it comprises one or more carriages (3) running longitudinally (axis X) on first parallel horizontal guides (2) arranged on a single base frame (1); at least one column (7) being engaged on each of said carriages (3), which comprises second front and/or back parallel vertical guides (8, 8') (axis Z) whereon one or more carriages (9, 9') run, whereon third cross running (axis Y) horizontal guides (12, 12') are arranged for bars (13) that support, each, either directly or by interchangeable turntables (28), fixed or rotating end heads (30), for holding tools (14, 14').

2. Handling head according to claim 1, **characterised in that** said longitudinal horizontal guides (2) oriented in the direction of a Cartesian axis (X), are arranged at the parallel sides of a base frame (1) and are suitable for moving one or more carriages (3) by at least one motor (Mx) and transmission means (4, 5, 6,); said carriages (3) being independent or associated to a common crosspiece (19) by transmission means (20, 21) and being able to operate one (right or left), two (side or opposite) or more, in independent or combined manner according to said motors and even for different operations.

3. Handling head according to claim 1, **characterised in that** said guides (8) are arranged on said vertical columns (7) integral to said carriages (3) and are suitable for the vertical run (Z) of said carriages (9) provided with horizontal guides (12) for the support and run (Y) of said support bars (13) for said tool holding heads (14), such runs being shunted from motors (Mz, My) and transmission means (10, 11, 15, 16); whereas said guides (8') of carriages (9') being suitable for the vertical motor driven run (My), and with transmissions (22), of columns (7'), and said carriages (9') being running on guides (12') arranged on said crosspiece (19) with movement shunted from motors (Mz1, Mz2).

4. Handling head according to claim 1, **characterised in that** said guides (12) for cross run (Y) for said bars (13) for supporting tool holding heads, are arranged on carriages (9) with motors (My) and transmissions (16), and run on vertical guides (8) arranged on said vertical columns (7).

5. Handling head according to the previous claims, **characterised in that** the movement of said carriages (3), of said columns (7, 7'), of said carriages (9, 9'), of said bars 13, of said end turntables (28) and of said tool holding heads (30) can be realised by conventional driving gears such as: motor reduction units, actuators, linear motors, hydraulic pistons, angular transmissions, flexible cables, rack couplings (4, 17) and engaging or pinions (5, 12'), plain or toothed belt couplings 16, geared and mating couplings, suitable for any specific functional requirement.

6. Handling head according to claim 1, **characterised in that** one or more carriages (3) are running and may be positioned in longitudinal direction on the parallel horizontal guides (2) of said base frame (1), provided with transmission means controlled by independent or combined motors (Mx); said carriages (3) being able to operate one (right or left), two (side or opposite) or more, in an independent or combined manner, according to said motors and even for different operations; said carriages (3) further being the support of at least one of said columns (7) comprising said parallel vertical front and/or back guides (8) for the run of at least one of said carriages (9).

7. Handling head according to the previous claims, **characterised in that** the translatory motion of said cross bar (13) running in said guides (12) of said at least one carriage (9) is obtained by an independent motor (My) and a plain or toothed belt coupling (16) that transmits the motion to a pinion (12') coupled to a rack (17) integral to said bar (13).

8. Handling head according to claims 1 to 7, **characterised in that** the translatory motion of said cross bar (13) running in said guides (12) of said at least one carriage (9) is obtained by the direct coupling of said motor (My) to said pinion (17'), through a geared transmission (12").

9. Handling head according to the previous claims, **characterised in that** the rotation of said turntable (28) is generated by a shaft (25), arranged within said cross bar (13), supported at the front by bearings and controlled in rotation by an independent motor (26); on said turntable (28) there being supported an independent motor (29) that rotates said head (30) holding the tools (14, 14'); between said turntable (28) and said support (30) there being inserted interchangeable shims (34) based on the type and/or on the length extension of the tools used.

10. Handling head according to the previous claims, **characterised in that** said shaft (25), that controls in rotation said turntable (28), is of tubular type and wherein the electrical cables for controlling said motor (29) and/or the cables and/or the pipes for feeding gas and air or pass, for operating said tools (14, 14').

11. Handling head according to the previous claims, **characterised in that** the base of said square turntable (28), for coupling with said driving shaft (25), has an inclination (α) suitable for coaxially aligning the working nozzle or point (32) of said interchangeable tools (14, 14') with the axis (33) of rotation of said shaft (25).

12. Handling head according to the previous claims, **characterised in that** the movement of said carriages (3), of said columns (7, 7'), of said carriages (9, 9'), of said bars 13, of said end turntables (28) and of said tool holding heads (30) can be realised by conventional driving gears such as: motor reduction units, actuators, linear motors, hydraulic pistons, angular transmissions, flexible cables, rack couplings (4, 17) and engaging or pinions (5, 17'), plain or toothed belt couplings (10, 16) geared and mating couplings, suitable for any specific functional requirement.

13. Handling head according to the previous claims, **characterised in that** it operates overhead arranging said tools (14, 14') such as plasma and/or laser heads, water cutting heads, percussion heads for mechanical engraving, ink marking heads for barcodes, numbers, letters, alphanumerical, control heads and others, in the desired positions, according to the processes to be carried out on the peripheral surfaces of trimmed bodies with quadrangular, rectangular, polygonal or circular section, solid and/or tubular.

14. Handling head according to the previous claims, **characterised in that** it is applicable to machines for feeding section bars in general, with upright or upturned arrangement, vertical or inclined, according to the setup of the feeding units and/or the products to be treated.
